# EUROPÄISCHE PATENTSCHRIFT

(11) **EP 0 934 836 B1**
(45) Veröffentlichungstag und Bekanntmachung des Hinweises auf die Patenterteilung: **07.07.2004**
(21) Anmeldenummer: 99102291.4
(22) Anmeldetag: 05.02.1999
(51) Int. Cl.: B60C 11/12, B29C 33/42, B29D 30/06

(54) **Fahrzeugluftreifen und Reifenvulkanisationsform mit Lamellen**
Vehicle tyre and tyre vulcanization mould with blades
Bandage pneumatique pour véhicule et moule de vulcanisation de pneu muni de lamelles

(30) Priorität: 05.02.1998 DE 19804338
(43) Veröffentlichungstag der Anmeldung: 11.08.1999
(73) Patentinhaber: Continental Aktiengesellschaft, 30165 Hannover (DE)
(72) Erfinder: Sych, Thomas, 30171 Hannover (DE); Mundl, Reinhard Dr., 30539 Hannover (DE)

(56) Entgegenhaltungen:
- EP-A- 0 698 512
- EP-A- 0 858 875
- DE-A- 19 612 829
- GB-A- 867 556
- PATENT ABSTRACTS OF JAPAN vol. 012, no. 471 (M-773), 9. Dezember 1988 (1988-12-09) -& JP 63 195006 A (YOKOHAMA RUBBER CO LTD:THE), 12. August 1988 (1988-08-12)
- PATENT ABSTRACTS OF JAPAN vol. 1997, no. 03, 31. März 1997 (1997-03-31) & JP 08 295104 A (BRIDGESTONE CORP), 12. November 1996 (1996-11-12)

## Beschreibung

Die Erfindung betrifft einen Fahrzeugluftreifen gemäß dem Oberbegriff des Patentanspruches 1, eine Lamelle gemäß dem Oberbegriff des Patentanspruches 9 und eine Reifenvulkanisationsform gemäß dem Oberbegriff des Patentanspruches 11.

Fahrzeugluftreifen gemäß dem Oberbegriff des Patentanspruches 1 sind ausgestattet mit einem Laufstreifen und einem Profil in diesem Laufstreifen, wobei einige Profilpositive durch feine Einschnitte darin in Profilpositivteile gegliedert sind, wobei zumindest einer der feinen Einschnitte eine Anhebung des Einschnittgrundes mit einer Erweiterung aufweist. Ein derartiger Fahrzeugluftreifen ist aus der JP-A-63195006 bekannt. Eine Lamelle und eine Vulkanisationsform gemäß den Oberbegriffen der Ansprüche 9 und 12 sind in der DE-A-196 12 829 bekannt.

Andere Fahrzeugluftreifen sind in zahlreichen Ausführungen als Winterreifen, Sommerreifen oder Ganzjahresreifen bekannt. Die EP 0 788 900 A1 lehrt einen Fahrzeugreifen mit einemLaufstreifenprofil mit solchen Profilpositiven, die eine Anzahl guerverlaufender feiner Einschnitte - nachfolgend Quereinschnitte genannt - aufweisen. Die Tiefe dieser Quereinschnitte schwankt über deren Erstreckung, sodass die Profilpositive in Bereiche geteilt sind, die unterschiedliche Steifigkeit aufweisen. Dieser Reifen ist ein Sommerreifen, bei dem die Beeinflussung der Steifigkeit einzelner Profilpositivbereiche die - ansonsten bei fortschreitendem Abrieb oft auftretende - Sägezahnbildung vermindern soll.

Die Zonen reduzierter Einschnitt-Tiefe nennen Reifentechniker in ihrem Jargon "Anbindungen" und anstelle von "feinen Einschnitten" reden sie kurz von "Einschnitten" oder "Sipes".

Solche Anbindungen von Profilpositivbereichen - also Reduktionen der Tiefe von Einschnitten entlang deren Erstreckung in der Draufsicht auf den Reifen - sind auch bei Winterreifen üblich, wo die Gesamtzahl von Einschnitten viel höher ist als bei Sommerreifen. Aber gerade bei Winterreifen haben solche Anbindungen den Nachteil, dass ab dem Erreichen des angehobenen Einschnittgrundes in diesen Bereichen keine Griffkanten mehr zur Verfügung stehen; diese Verkürzung der Griffkantenlängen beeinträchtigt die Winterfahreigenschaften.

Zur Vermeidung einer zu großen Aufweichung in Randbereichen von Positiven, werden Einschnittgrund-Anhebungen oft an den Mündungen der Einschnitten in breitere Nuten angeordnet.

Die **EP 0 664 230 A1** möchte an Winterreifen über ihre gesamte Lebensdauer die Griffkantenlänge an ihren Einschnitten genügend groß halten. Gemäß dieser Schrift sollen die Einschnitte Positiv-Inseln umschließen, die entweder
a) zumindest über einen Teil ihrer radialen Erstreckung derartig doppelkonisch gestaltet sind, dass die Querschnittfläche der Positiv-Inseln, von der Laufstreifenoberfläche aus betrachtet, zunächst größer wird und ab einer bestimmten Einschnitt-Tiefe wieder abnimmt, oder
b) ab einer Grenz-Einschnitt-Tiefe in ein Paar voneinander getrennte Einschnitte übergeht, deren gegenseitiger Abstand sich mit zunehmender Profiltiefe verringert.
Bei beiden Varianten ist also keine Anbindung, wie sie aus den oben erwähnten Druckschriften bekannt ist, vorgesehen.

Das **österreichische Patent Nr. 402 180** schlägt vor, in den Profilpositiven eines Winterreifenprofiles Einschnitte so anzuordnen, dass sie ein Netz aus im wesentlichen regelmäßigen N-Ecken bilden, wobei vorzugsweise N = 6 ist. Hiermit erreicht der Reifen eine hohe Griffigkeit, weil die Einschnitte sehr dicht angeordnet sind, und weil eine günstige Biegesteifigkeit der Profilblöcke erreichbar ist.

Das auf eine Priorität vom 31. Dezember 1958 aus den USA zurückgehende deutsche Gebrauchsmuster 18 65 821 und die inhaltsähnliche deutsche Patentanmeldung P.A. 697 728 lehren ein wellenwabenförmiges Netz von Einschnitten in einem Reifenlaufstreifen, wobei die Einschnittgründe periodisch - jeweils eine Profilpositiv-Anbindung erreichend -angehoben sind. Die Flanken dieser Anbindungen verlaufen radial.

Ferner gehören zum Stande der Technik: EP 03 42 908 A2, DE-AS 11 68 789 und JP-Abstract 08 324 211. Den Überblick über den Stand der Technik zusammenfassend steht also bislang der Reifenprofilkonstrukteur in dem Konflikt, dass er mit zahlreichen und kräftigen Anbindungen eine günstige Verteilung der Positivsteifigkeit erreichen kann/ andererseits aber Anzahl und Bemessung der Anbindungen gering halten möchte, um eine große Kantenlänge auch nach Abrieb der oberhalb der Grundanhebungen befindlichen Profiltiefe weitgehend aufrecht zu erhalten. Aufgabe der Erfindung ist es, den genannten Konflikt zu entschärfen.

Diese Aufgabe wird durch einen Fahrzeugluftreifen gemäß Anspruch 1 gelöst. Lamellen gemäß Anspruch 9 dienen dazu, in Vulkanisationsformen gemäß Anspruch 11 eingesetzt zu werden, und diese wiederum sind dazu erforderlich, erfindungsgemäße Reifen herzustellen.

Die Anhebung des Einschnittgrundes ist in einem radial inneren Bereich zwar in an sich bekannter Weise stegartig gestaltet, weist hingegen an ihrem radial äußeren Ende eine Erweiterung auf, die in der durch den betreffenden Einschnitt erzeugten Schnittfläche liegt und im Wesentlichen kreisförmig gestaltet ist. Die Grundanhebung ist also radial außen kräftiger bemessen als radial innen. Mit dieser Ausführungsform kann durch Wahl eines geeigneten Kreisdurchmessers die verbleibende Beweglichkeit der aneinander angebundenen Profilpositive dem festgestellten Steifigkeitsbedarf angepasst werden.

So kann bei noch voller Profiltiefe eine besonders große Stabilisierung der aneinander angebundenen Profilpositive erreicht werden, also in den Phasen der Lebensdauer, wo dies besonders wichtig ist. Nach radial innen hin, also in Bereichen, die erst in späteren Phasen der Lebensdauer in Bodenkontakt kommen, werden die Anbindungen hingegen schmaler; dies verringert nicht nur die Steifigkeit der Anbindungen - was in diesen späteren Phasen angesichts ohnehin generell erhöhter Steifigkeit bei abnehmender Profiltiefe zumindest nicht stört - sondern führt zu einer Vergrößerung der Einschnitt-Kantenlänge in den Lebensphasen, wo dies angesichts im übrigen abnehmender Profilgriffigkeit besonders wichtig ist. Die erfindungsgemäß hinterschneidende Ausführung der die Anbindungen erzeugenden Lamellenaussparungen erzeugt also am weit abgefahrenen Reifen eine größere Griffkantenlänge als die vorbekannte Ausführung mit radialen, nicht hinterschneidenden Flanken.

Die Anbindungen können so gesetzt sein/ dass eine für die Traktion auf Schnee und Eis günstige Profilbeweglichkeit in der Umfangsrichtung bei gleichzeitiger, für das Lenkverhalten günstiger Quersteifigkeit gegeben ist; hierzu müssen sie in denjenigen Einschnitten besonders häufig und/oder kräftig vertreten sein, die sich im wesentlichen längs der Fahrtrichtung erstrecken.

Weitere besonders vorteilhafte Ausgestaltungsmöglichkeiten der Erfindung sind in den Unteransprüchen enthalten.

Weiter bevorzugt ist bei dieser Ausführung der Steg, der von der jeweiligen erweiterten Zone der Anbindung bis auf die volle Einschnitt-Tiefe verläuft, so schmal, dass er als "Verbindungshaut" bezeichnet werden könnte. Diese Verbindungshaut hat gemäß Anspruch 2 - in der Erstreckungsrichtung des Einschnittes betrachtet - eine Breite, die kleiner als die in dieser Richtung gemessene maximale Breite der Erweiterung der Anbindung ist. Die Verbindungshaut kann so dünn bemessen sein, dass sie nach erfolgtem Abrieb der Erweiterung der Anbindung einreisst. Gemäß Anspruch 3 kann der schmale stegartige Bereich der Anbindung, der sich zwischen Erweiterung und Einschnittgrund befindet, mit konstanter Breite ausgeführt sein.

Um eine gleichmäßige Steifigkeit oder Beweglichkeit der Profilpositive in den verschiedenen Beanspruchungsrichtungen zu erzielen, ist es dabei von Vorteil, wenn die erfindungsgemäßen Erweiterungen verschiedener Einschnitte gemäß Anspruch 4 verschieden hoch angeordnet sind. Hierbei ist also der zur Profiloberflache gemessene kleinste radiale Abstand von Anbindungs-Erweiterungen in Einschnitten innerhalb eines Profilpositives unterschiedlich. Besonders bevorzugt sind dabei gemäß Anspruch 5 diejenigen Anbindungs-Erweiterungen höher angeordnet, die sich in der Nähe von Profilrillen befinden. Anstelle von "in der Nähe von Profilrillen", einer vom Negativ aus betrachtenden Darstellung, könnte man den selben Sachverhalt auch vom Positiv aus betrachtend darstellen, dass nämlich der kleinste zur Profiloberfläche gemessene radiale Abstand von solchen Erweiterungen, die Profilpositivkanten (also Rändern von Klötzen oder Positivbändern) benachbart sind, kleiner ist als von Erweiterungen, die im Inneren des Profilpositives angeordnet sind.

Die gegenständliche Erfindung ist von besonderem Vorteil bei Laufstreifenprofilen für Winterreifen. Um eine möglichst große Anzahl von in den unterschiedlichen Beanspruchungsrichtungen wirkenden Einschnitten zur Verfügung zu haben, ist es dabei besonders vorteilhaft, wenn zumindest im Mittelbereich des Profilpositives die Einschnitte, in Draufsicht betrachtet, ein Netz aus zumindest regelmäßigen 6-Ecken bilden. An den Profilpositivkanten wird dabei die Ausführung bevorzugt so getroffen, dass Einschnitte, die dort nach außen münden, Teilbereiche des Netzes aus 6-Ecken bilden.

Bei einem derart gestalteten Laufstreifenprofil hat es sich als günstig heraus gestellt, wenn in zumindest einigen Einschnitten jeweils zumindest eine einzige Grundanhebung mit einer erfindungsgemäßen Erweiterung ausgebildet ist.

Die Erfindung betrifft auch jenen Teil einer Reifenform, welcher zur Ausbildung eines Laufstreifenprofiles eines Fahrzeugluftreifens vorgesehen ist und mit Stegen od. dgl. zum Ausformen der Nuten und mit Lamellenblechen zum Ausformen von Einschnitten versehen ist. Erfindungsgemäß weisen zumindest einige Lamellen solche Aussparungen auf, die beabstandet von der den Einschnittgrund erzeugenden Lamellenkante eine Erweiterung aufweisen. Diese Aussparungen können durch Ausstanzen erzeugt werden.

Bei einer möglichen Ausführungsform sind die Aussparungen mit ebenfalls ausgestanzten Ausformschlitzen, deren Breite geringer ist als die maximale Breite der Aussparungen, verbunden. Bei einer zweiten möglichen Ausführungsform bilden die Aussparungen in radialer Richtung verlaufende, längliche Ausnehmungen, die bis an die freien Lamellenblechkanten reichen, wobei in diesem Fall die radiale Erstreckung der Aussparungen größer ist, insbesondere mindestens um das 1,5-fache größer ist, als ihre größte Breite.

Zur Ausformung von wabenförmig strukturierten Einschnitten in Profilpositiven sind zum Einsatz in die profilprägenden Segmente einer Reifenvulkanisationsform Lamellen aus Blech vorgesehen, die ein wabenförmiges Netz bilden.

Weitere Merkmale, Vorteile und Einzelheiten der Erfindung werden nun anhand der Zeichnung, die ein Ausführungsbeispiel darstellt, näher beschrieben. Die Zeichnungsfiguren sind schematische Darstellungen; dabei zeigt
- Fig. 1: eine Draufsicht auf ein Profilpositiv, hier der Einfachheit halber auf einen in der Draufsicht quadratischen Profilblock,
- Fig. 2: eine Schrägansicht des Profilpositives aus Fig. 1 mit zugehörigem Laufstreifenunterbau und dem das Einschnittnetz ausformenden Lamellenblechnetz der Reifenform und
- Fig. 3: eine Ansicht des Lamellenblechnetzes aus Fig. 2 in Richtung des Pfeiles A₃.

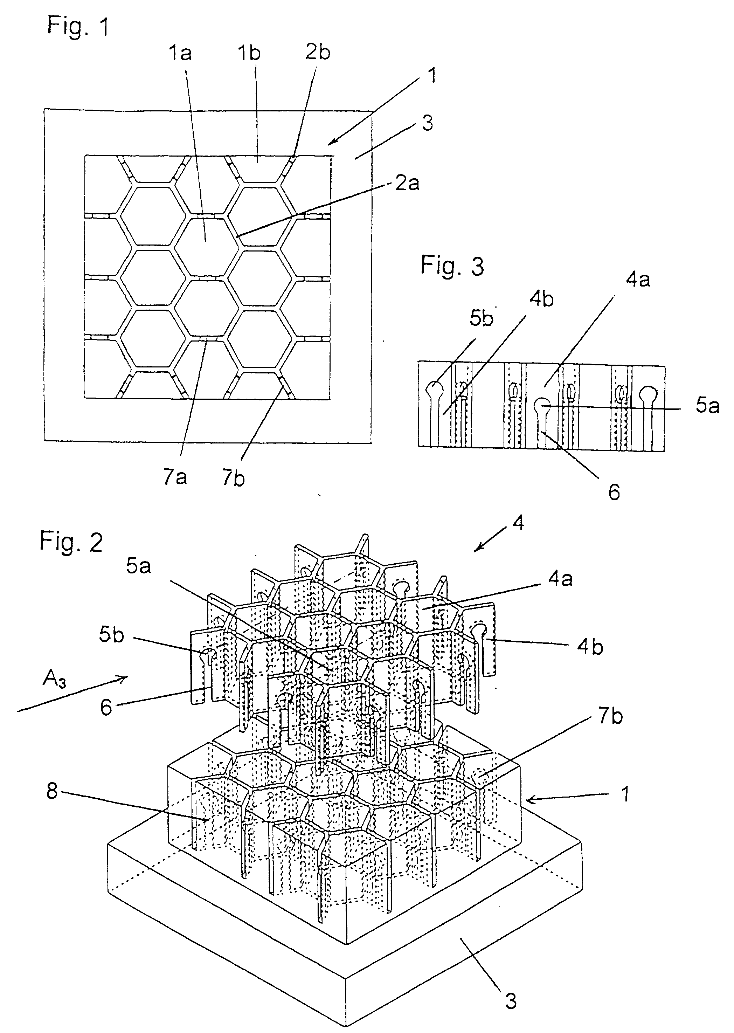

Das in **Figur 1** gezeigte Profilpositiv 1 ist durch Einschnitte 2a, 2b netzartig strukturiert und in Profilpositivteile 1a und 1b gegliedert. Dabei wird im Rahmen dieser Anmeldung unter einem "Einschnitt" ein längliches Negativ einer Breite von 0,3 bis 1 mm, besonders von 0,3 bis 0,6 mm, verstanden. Das gezeigte Netz von Einschnitten 2a, 2b zeigt im Mittenbereich eines jeden Profilpositives ein Netz aus regelmäßigen Sechsecken, die die Profilpositivteile 1a komplett umschließen. Die an den Seitenkanten des Profilpositives 1 auslaufenden Einschnitte 2b umschließen dort die Profilpositivteile 1b, die demnach nicht komplett von Einschnitten 2a, 2b umgeben sind und zum Großteil eine vom Sechseck abweichende Grundrissform besitzen, aber bevorzugt Teilbereiche von Sechsecken sind.

Die hier dargestellte Ausführungsform mit in Draufsicht 6-eckförmig ausgestalteten Profilpositivteilen 1a ist bevorzugt. Dabei sollten die 6-Ecke nicht streng regelmäßig ausgestaltet sein, sondern leicht unregelmäßige Umrisse aufweisen. Hierbei wird der Fachmann auf das Abrollgeräusch achten, bezüglich dessen gleichmäßige und sich wiederholende Strukturen im Laufstreifenprofil ungünstig sind.

Profilpositive 1 mit einem 6-Eck-Wabennetz von Einschnitten haben bevorzugt eine sehr hohe Einschnittdichte, was für die Griffeigenschaften günstig ist. Ein Reifen, bei dem diese Art der Einschnitt-Strukturierung gewählt ist, ist daher besonders für den Wintereinsatz geeignet, bei dem es auf gutes Traktions- und Bremsverhalten auf schneeigem oder eisigem Untergrund ankommt. Die Ausbildung eines Netzes aus 6-Ecken verteilt die Einschnitte auf isotrope Weise. Dies hat gegenüber den üblicherweise zur Reifenumfangsrichtung im wesentlichen quer orientierten Einschnitten den Vorteil einer höheren seitlichen Rutschfestigkeit des Laufstreifenprofiles auf Schnee und Eis.

Ein klotzförmiges Profilpositiv 1, wie es Figur 1 zeigt, ist von Profilrillen umgeben, wobei die Rillen, die in Umfangsrichtung des Reifens verlaufen in anderer Breite ausgeführt sein können als die in der Querrichtung verlaufenden Rillen.

Der in **Figur 1** in Draufsicht und in **Figur 2** in Schrägansicht dargestellte Teil 3 deutet einen Teil der Laufstreifenbasis an, deren oberste Begrenzungsfläche der üblichen Nuttiefe entspricht und welche bei einer Ausführung des Laufstreifens mit Kronenteil und Basis (cap and base) ein gesonderter, aus einer gegenüber dem Kronenteil abweichenden Kautschukmischung gefertigtes Reifenaufbauteil ist. Die Fläche, auf der das Profilpositiv 1 sozusagen aufgesetzt dargestellt ist, befindet sich somit dort, wo die auf Profiltiefe ausgeführen Nuten enden.

Zur Ausbildung einer Grundanhebung in einem Einschnitt weist die den betreffenden Einschnitt während der Vulkanisation des Reifens formende Lamelle an jener Stelle, wo der Einschnitt eine geringere Tiefe aufweisen soll, eine entsprechenden Aussparung auf. Der Umriss dieser Aussparung entspricht dem Umriss der damit erzeugten Anbindung.

In der besonders bevorzugten Ausführung gemäß **Figur 2** wird zur Ausformung der Einschnitte 2a, 2b im Profilpositiv 1 ein Netz 4 aus Lamellen verwendet, welches in bekannter Weise mit einem das Laufstreifenprofil ausformenden Teil der Reifenvulkanisierform, die bei PKW-Reifen üblicherweise radial geteilt ist, verbunden ist. Zur Prägung der Profilrillen besitzen Reifenformsegmente entsprechend ausgebildete Stege. Das Lamellenblech 4 grenzt allseitig an solche Stege. Der besseren Verständlichkeit halber ist in Figur 2 auf die Darstellung solcher Reifenformsegmente verzichtet worden, sodass dort lediglich das Netz aus Lamellen gezeigt ist.

Das Lamellennetz 4 ist so aus einzelnen Lamellen 4a und 4b zusammengesetzt, dass sich eine 6-Eck- wabenförmige Struktur ergibt. Die Lamellenteile 4a begrenzen allseitig die 6-Ecke, die Lamellenteile 4b sind die außenseitig angrenzenden Teile des Netzes 4. Die Wabenstruktur ist zu den vier Seiten offen, sodass beim Prägen des Profilpositives 1 die aus Figur 1 und aus Figur 2 ersichtliche Einschnittgestalt im Profilpositiv 1 entsteht. Die Lamellenteile 4a, 4b weisen Aussparungen mit Erweiterungen 5a, 5b auf, die bevorzugt kreisförmig sind.

Beim dargestellten Ausführungsbeispiel sind nicht in allen Lamellenteilen Aussparungen vorgesehen; zwar haben alle Lamellenteile 4b je eine Aussparung mit einer Erweiterung 5b, aber von den Lamellenteilen 4a haben nur einige im mittleren Bereich je eine Aussparung mit einer Erweiterung 5a.

Die Größe bzw. den Durchmesser jeder Erweiterung 5a, 5b wählt der Fachmann danach, wie steif die Anbindungen 7a, 7b mit ihren Erweiterungen 5a, 5b zwischen den benachbarten Profilpositivteilen 1a, 1b sein sollen. Bevorzugt haben die Erweiterungen 5a, 5b einen Durchmesser zwischen 2 und 5 mm.

Von jeder Erweiterung 5a, 5b führt ein in radialer Richtung ein Ausformschlitz 6 zu der den Einschnittgrund erzeugenden Lamellenkante. Dieser Schlitz 6, von dem hingenommen wird, dass er einen "Steg" oder eine "Verbindungshaut" im Reifen erzeugt, soll das Herausnehmen des Reifens aus der Heizform nach Abschluss der Vulkanisation ermöglichen. Die Breite dieser Schlitze 6 soll um 1 bis 3 mm kleiner sein als die größte Breite (normal zur radialen Richtung gemessen) der betreffenden Erweiterung 5a, 5b.

Die Übergänge zwischen den Erweiterungen 5a, 5b und den Schlitzen 6 werden abgerundet, um der Gefahr des Einreißens beim Ausformen entgegen zu wirken. Die Erweiterungen 5a, 5b und die Schlitze 6 werden üblicherweise durch Ausstanzen erzeugt. Die Aussparungs-Erweiterungen 5a, 5b in den Lamellen erzeugen im Reifen zwischen benachbarten Profilpositiven 1a, 1b, Anbindungen 7a, 7b.

Durch die oben beschriebene Verteilung der Aussparungs-Erweiterungen 5a, 5b im Lamellenblechnetz 4 entsteht im Profilpositiv 1 eine korrespondierende Anordnung von Anbindungen 7a, 7b. Das heißt, dass im dargestellten Ausführungsbeispiel in den an den Profilpositivkanten nach außen mündenden Einschnitten 2b je eine Anbindung 7b und in den in der Profilpositivmitte verlaufenden Einschnitten 2a je eine Anbindung 7a vorgesehen ist. Wäre ein derart ausgeführtes Profilpositiv 1 in einer Laufstreifenschulter angeordnet, so soll vorzugsweise die horizontale Richtung in Figur 1 etwa der Umfangsrichtung entsprechen.

Die Stege 8 sind vorzugsweise so schwach bemessen, dass sie nach erfolgtem Abrieb der Anbindungs-Erweiterungen 7a, 7b ein- oder abreißen, also nicht mehr zur Steifigkeit beitragen.

Nach Überschreiten jener Profiltiefe, auf der sich die Anbindungs-Erweiterungen 7a, 7b befinden, also nach einem gewissen Laufstreifenabrieb, mindert sich die gegenseitige Abstützung zwischen den zuvor verbundenen Positiven. Hierdurch wird die Beweglichkeit der zuvor stärker aneinander angebundenen Profilpositive 1a, 1b wieder erhöht.

Zur Verstetigung dieses vorteilhaften Effektes kann die Anbindungs-Erweiterung auch stetig in den radial weiter innen angeordneten, stegartigen Bereich übergehen. Diese nicht dargestellte Entwicklungsrichtung auf die Spitze treibend kommt man zu einer solchen Einschnittgrundanhebung, die schon im Neuzustande bis zur Laufstreifenperipherie hochreicht, also als Einschnittunterbrechung wahrgenommen wird. In einem Schnitt längs der Erstreckung der unterbrochenen Einschnitte würde diese Unterbrechung als ein Trapez wahrgenommen, dessen Basis (= längere der beiden parallelen Seiten) radial außen läge. Das Entscheidende ist auch hierbei, dass die Flanken der so gestalteten Einschnittgrund-Anhebung oder Einschnitt-Unterbrechung von der Radialen abweichend so schräg gestellt sind, dass - einen Lamellenhinterschnitt in Kauf nehmend - die an der jeweiligen Laufflächenperipherie sichtbare Länge der Einschnitt-Unterbrechung über zunehmendem Abrieb abnimmt. Dadurch wird auch in dieser Extremform der Erfindung neben der Kompensation des ansonsten auftretenden Steifigkeitszuwachses der Vorteil erreicht, dass die zur Verfügung stehende Griffkantenlänge über zunehmendem Abrieb steigt.

Eine weitere, besondere Ausgestaltung der Erfindung zeigt Figur 3, die eine Ansicht des Lamellennetzes 4 aus Figur 2 in Richtung des Pfeiles A₃ zeigt.

Die Lamellenteile 4a haben Aussparungen mit Erweiterungen 5a, die im fertig geheizten Reifen Anbindungen 7a erzeugen, die einen größeren Abstand zur Laufstreifenoberfläche haben als jene Anbindungen 7b, die in den zu den Seitenkanten des Profilpositives 1 laufenden Einschnitten 2b ausgebildet sind. Letztere Anbindungen 7b werden von Aussparungs-Erweiterungen 5b an den nach außen verlaufenden Lamellenteilen 4b gebildet. Die Anbindungen 7a in innenliegenden Einschnitten 2a befinden sich bevorzugt in einer Tiefe von 45 bis 55%, insbesondere 50 %, der Profiltiefe, die Anbindungen 7b in nach außen mündenden Einschnitten 2b hingegen in einer Tiefe von 20 bis 30 % der Profiltiefe.

Hierdurch kann die ansonsten höhere Beweglichkeit der außen liegenden Profilpositivteile 1b an die der innen im Block liegenden, sich bei Beanspruchung gegenseitig abstützenden Profilpositivteile 1a angepasst werden.

Das erfindungsgemäße System von Anbindungen zwischen Profilpositiven - Klötzen oder Blöcken genauso wie langgestreckten Positivbändern und dergleichen - lässt sich in der Praxis sehr unterschiedlich einsetzen. Durch die Wahl der Anzahl der erweiterten Anbindungen pro Einschnitt oder Einschnitteil, durch deren Anordnung, ob nun eine Anbindung etwas tiefer im betreffenden Einschnitt oder etwas höher liegt, durch die Wahl und Variation ihrer Größen etc., können Systeme aus erfindungsgemäßen Anbindungen passend zu den unterschiedlichsten Blockformen mit den unterschiedlichsten Einschnittsystemen und -gestaltungen hinsichtlich ihres Einflusses auf die Biegesteifigkeit eines Profilpositives bei verschiedenen Belastungen ausgelegt werden. Die durch solche Anbindungen mit Erweiterungen erzielbare Begrenzung der Beweglichkeit der einzelnen Profilpositive ist vor allem für das Fahrverhalten des Reifens von großem Vorteil.

Während des Abriebs des Laufstreifenprofiles bleibt das Einschnittbild bis auf die volle Profiltiefe im wesentlichen erhalten. Dies gewährleistet bei Winterreifen, dass die Wintereigenschaften, insbesondere das Traktionsverhalten und Bremsverhalten des Reifens auf Schnee und Eis, auf die Lebensdauer des Reifens nahezu unverändert gut erhalten bleiben können.

## Patentansprüche

1. Fahrzeugluftreifen
- mit einem Laufstreifen
- und einem Profil an diesem Laufstreifen,
- wobei einige Profilpositive (1) durch feine Einschnitte (2a, 2b) darin in Profilpositivteile gegliedert sind,
- wobei zumindest einer der feinen Einschnitte (2a und/oder 2b) eine Anhebung (6) des Einschnittgrundes aufweist, welche in einem radial inneren Bereich in an sich bekannter Weise stegartig gestaltet ist,
- hingegen an ihrem radial äußeren Ende eine Erweiterung (7a, 7b) aufweist,
- die in der durch den betreffenden Einschnitt erzeugten Schnittfläche liegt,
**dadurch gekennzeichnet,**
**dass** die Erweiterung (7a, 7b) kreisförmig gestaltet ist.

2. Fahrzeugluftreifen nach Anspruch 1, **dadurch gekennzeichnet, dass** die radiale Erstreckung des radial inneren, stegartigen Bereiches der Grundanhebung, also das radiale Maß von einem nicht-angehobenen Bereich des Einschnittgrundes bis zur radial inneren Begrenzung der Erweiterung (7a, 7b), größer ist als dessen maximale Breite.

3. Fahrzeugluftreifen nach Anspruch 1, **dadurch gekennzeichnet, dass** die Grundanhebung des Einschnittes im stegartigen, radial inneren Bereich zumindest mit konstanter Breite ausgeführt ist.

4. Fahrzeugluftreifen nach einem der Ansprüche 1 bis 3, **dadurch gekennzeichnet, dass** der zur Profiloberfläche gemessene kleinste radiale Abstand von Erweiterungen (7a, 7b) in Einschnitten (2a, 2b) innerhalb eines Profilpositivs (1) unterschiedlich ist.

5. Fahrzeugluftreifen nach Anspruch 4, **dadurch gekennzeichnet, dass** der kleinste zur Profiloberflache gemessene radiale Abstand von Erweiterungen (7b), die Profilpositivkanten benachbart sind, kleiner ist als von Erweiterungen (7a), die im Inneren des Profilpositivs (1) angeordnet sind.

6. Fahrzeugluftreifen nach einem der Ansprüche 1 bis 5, **dadurch gekennzeichnet, dass** zumindest im Mittelbereich des Profilpositivs (1) die Einschnitte (2a, 2b) , in Draufsicht betrachtet, ein Netz aus zumindest regelmäßigen Sechsecken bilden.

7. Fahrzeugluftreifen nach Anspruch 6, **dadurch gekennzeichnet, dass** die Einschnitte (2b), die an Profilpositivkanten nach außen münden, Teilbereiche des Netzes aus Sechsecken bilden.

8. Fahrzeugluftreifen nach Anspruch 6 oder 7, **dadurch gekennzeichnet, dass** in zumindest einigen Einschnitten (2a, 2b) jeweils zumindest eine einzige Erweiterung (7) ausgebildet ist.

9. Lamelle (4),
- geeignet zur Verwendung in einer Reifenvulkanisationsform innerhalb des Bereiches der in den Laufstreifen Einschnitte einprägt,
- wobei die Lamelle (4) eine Absenkung (6) ihrer einschneidenden Stirnfläche zur Lamellenwurzel hin aufweist,
- wobei diese Absenkung (6) dieser Stirnfläche in einem der einschneidenden Stirnfläche nahen Bereich in an sich bekannter Weise schlitzartig gestaltet ist,
- **dadurch gekennzeichnet, dass** die Absenkung hingegen an ihrem der Lamellenwurzel zugewandten, im eingebauten Zustande also radial äußeren Ende eine Erweiterung (7a,7b) aufweist,
die in der Lamellenebene liegt und
- kreisförmig gestaltet ist.

10. Lamelle (4) nach Anspruch 9, **dadurch gekennzeichnet, dass** die radiale Erstreckung des an sich bekannten, schlitzartigen Bereiches der Absenkung der einschneidenden Stirnfläche der Lamelle (4), also das radiale Maß von einem nicht-abgesenkten Bereich der einschneidenden Stirnfläche bis zum Übergang in die Erweiterung (7a,7b) größer ist als die maximale Breite dieses schlitzartigen Bereiches.

11. Reifenvulkanisationsform, die nach radial innen hin vorspringende Lamellen in dem Bereich aufweist, der zur Prägung des Laufflächenbereiches von Reifen bestimmt ist, wobei zumindest einige dieser Lamellen (4) gemäß Anspruch 9 ausgestaltet sind.

12. Reifenvulkanisationsform nach Anspruch 11, in der Lamellen (4) so angeordnet sind, dass sie ein wabenförmiges Lamellennetz bilden, **dadurch gekennzeichnet, dass** innerhalb des besagten wabenförmigen Lamellennetzes zumindest teilweise Lamellen gemäß Anspruch 9 verwendet sind.

## Claims

1. Vehicle pneumatic tyre
- having a tread strip
- and a profile on this tread strip
- some profile positives (1) being subdivided by fine incisions (2a, 2b) therein into profile positive parts,
- at least one of the fine incisions (2a and/or 2b) having a raised portion (6) of the incision base, which raised portion has a web-like configuration in a radially inner region in a manner known per se,
- on the other hand, having an enlargement (7a, 7b) on its radially outer end
- which enlargement is situated in the cut face produced by the relevant incision,
**characterised in that**
the enlargement (7a, 7b) has a circular configuration.

2. Vehicle pneumatic tyre according to claim 1, **characterised in that** the radial extension of the radially inner, web-like region of the base raised portion, i.e. the radial size of a non-raised region of the incision base up to the radially inner delimitation of the enlargement (7a, 7b), is greater than its maximum width.

3. Vehicle pneumatic tyre according to claim 1, **characterised in that** the base raised portion of the incision is configured in the web-like, radially inner region at least with a constant width.

4. Vehicle pneumatic tyre according to one of the claims 1 to 3, **characterised in that** the smallest radial spacing of enlargements (7a, 7b) in incisions (2a, 2b), measured relative to the profile surface, is different within one profile positive (1).

5. Vehicle pneumatic tyre according to claim 4, **characterised in that** the smallest radial spacing of enlargements (7b), which are measured relative to the profile surface and are adjacent to profile positive edges, is smaller than of enlargements (7a) which are disposed in the interior of the profile positive (1).

6. Vehicle pneumatic tyre according to one of the claims 1 to 5, **characterised in that**, at least in the central region of the profile positive (1), the incisions (2a, 2b), seen in plan view, form a network of at least regular hexagons.

7. Vehicle pneumatic tyre according to claim 6, **characterised in that** the incisions (2b), which open outwardly at profile positive edges, form partial regions of the network of hexagons.

8. Vehicle pneumatic tyre according to claim 6 or 7, **characterised in that**, in at least some incisions (2a, 2b) respectively, at least one single enlargement (7) is configured.

9. Lamella (4)
- suitable for use in a tyre vulcanisation mould within the region which impresses incisions in the tread strip,
- the lamella (4) having a depression (6) of its incising end face towards the root of the lamella,
- this depression (6) of this end face having a slot-like configuration in a manner known per se in a region which is near to the incising end face,
**characterised in that** the depression, on the other hand, has an enlargement (7a, 7b) on its end which is orientated towards the root of the lamella, i.e. radially outer end in the incorporated state, which enlargement is situated in the plane of the lamella and has a circular configuration.

10. Lamella (4) according to claim 9, **characterised in that** the radial extension of the known per se, slot-like region of the depression of the incising end face of the lamella (4), i.e. the radial size of a non-depressed region of the incising end face up to the transition into the enlargement (7a, 7b), is larger than the maximum width of this slot-like region.

11. Tyre vulcanisation mould, which has lamellae projecting radially inwardly in the region which is intended for the impression of the tread region of tyres, at least some of these lamellae (4) being configured according to claim 9.

12. Tyre vulcanisation mould according to claim 11, in which lamellae (4) are disposed such that they form a honeycombed lamellar network, **characterised in that**, within the aforementioned honeycombed lamellar network, lamellae according to claim 9 are used at least partially.

## Revendications

1. Pneumatique de véhicule,
- avec une bande de roulement,
- et une sculpture sur cette bande de roulement,
- certains éléments positifs de la sculpture (1) étant divisés par de fines entailles (2a, 2b) à l'intérieur en parties positives de sculpture,
- moyennant quoi au moins l'une des fines entailles (2a et/ou 2b) présente une élévation (6) du fond d'entaille, qui est conçue de façon connue comme une nervure dans une zone intérieure au plan radial,
- présente en revanche un élargissement (7a, 7b) sur son extrémité extérieure au plan radial,
- qui est située dans la surface de coupe générée par l'entaille concernée,
**caractérisé en ce que**
l'élargissement (7a, 7b) est conçu avec une forme circulaire.

2. Pneumatique de véhicule selon la revendication 1, **caractérisé en ce que** l'étirement radial de la zone intérieure au plan radial et du type nervure de l'élévation du fond, donc la cote radiale depuis une zone non soulevée du fond d'entaille jusqu'à la limite intérieure au plan radial de l'élargissement (7a, 7b) est supérieure à sa largeur maximale.

3. Pneumatique de véhicule selon la revendication 1, **caractérisé en ce que** l'élévation du fond de l'entaille est conçue au moins avec une largeur constante dans la zone intérieure au plan radial et du type nervure.

4. Pneumatique de véhicule selon l'une quelconque des revendications 1 à 3, **caractérisé en ce que** le plus petit espacement radial, mesuré par rapport à la surface de la sculpture, des élargissements (7a, 7b) dans des entailles (2a, 2b) est différent à l'intérieur d'un élément positif de sculpture (1).

5. Pneumatique de véhicule selon la revendication 4, **caractérisé en ce que** le plus petit espacement radial, mesuré par rapport à la surface de la sculpture, d'élargissements (7b), qui sont voisins d'arêtes positives de sculpture, est plus petit que celui d'élargissements (7a) qui sont disposés à l'intérieur de l'élément positif de sculpture (1).

6. Pneumatique de véhicule selon l'une quelconque des revendications 1 à 5, **caractérisé en ce que**, au moins dans la zone centrale de l'élément positif de sculpture (1), les entailles (2a, 2b) forment en vue de dessus un réseau constitué d'hexagones au moins réguliers.

7. Pneumatique de véhicule selon la revendication 6, **caractérisé en ce que** les entailles (2b), qui débouchent vers l'extérieur sur des arêtes positives de sculpture, forment des zones partielles du réseau constitué d'hexagones.

8. Pneumatique de véhicule selon la revendication 6 ou 7, **caractérisé en ce qu'**au moins un seul élargissement (7) est conçu respectivement dans au moins certaines entailles (2a, 2b).

9. Lamelle (4),
- appropriée pour une utilisation dans un moule de vulcanisation de pneumatique à l'intérieur de la zone qui présente des entailles dans la bande de roulement,
- la lamelle (4) présentant un abaissement (6) de sa surface frontale d'entaillage en direction de la racine de la lamelle,
- moyennant quoi cet abaissement (6) de cette surface frontale est conçu de façon connue en forme de fente dans une zone proche de la surface frontale d'entaillage,
- **caractérisée en ce que** l'abaissement présente en revanche un élargissement (7a, 7b) sur son extrémité tournée vers la racine de la lamelle, donc extérieure au plan radial dans l'état monté, qui est disposé dans le plan de lamelle et est conçu avec une forme circulaire.

10. Lamelle (4) selon la revendication 9, **caractérisée en ce que** l'étirement radial de la zone connue en soi et en forme de fente de l'abaissement de la surface frontale d'entaillage de la lamelle (4), donc la côte radiale allant d'une zone non abaissée de la surface frontale d'entaillage jusqu'à la transition avec l'élargissement (7a, 7b) est supérieure à la largeur maximale de cette zone en forme de fente.

11. Moule de vulcanisation de pneumatique, qui présente des lamelles débordant vers l'intérieur au plan radial dans la zone qui est destinée à marquer la zone de la bande de roulement du pneumatique, au moins certaines de ces lamelles (4) étant conçues selon la revendication 9.

12. Moule de vulcanisation de pneumatique selon la revendication 11, dans lequel des lamelles (4) sont disposées de telle sorte qu'elles forment un réseau de lamelles à alvéoles, **caractérisé en ce que**, à l'intérieur dudit réseau de lamelles à alvéoles, on utilise au moins partiellement des lamelles selon la revendication 9.
